# EUROPEAN PATENT SPECIFICATION

(11) **EP 0 590 589 B1**
(45) Date of publication and mention of the grant of the patent: **24.03.1999**
(21) Application number: 93115620.2
(22) Date of filing: 28.09.1993
(51) Int. Cl.: H01Q 1/52, H01Q 7/08

(54) **Transponder antenna with shield**
Transponderantenne mit Schirm
Antenne pour transpondeur muni d'un écran de blindage

(30) Priority: 28.09.1992 GB 9220409
(43) Date of publication of application: 06.04.1994
(73) Proprietor: TEXAS INSTRUMENTS INCORPORATED, Dallas Texas 75265 (US); TEXAS INSTRUMENTS HOLLAND B.V., 7602 EM Almelo (NL)
(72) Inventor: D'Hont, Loek, NL-Almelo (NL)
(74) Representative: Schwepfinger, Karl-Heinz, Dipl.-Ing.

(56) References cited:
- EP-A- 0 040 544
- EP-A- 0 409 343
- WO-A-89/07347
- US-A- 3 453 634
- US-A- 4 101 899
- US-A- 4 876 709

## Description

This invention relates to a transponder, for example, for use in Registration and Identification Systems.

Transponders or antennae may be used in registration and identification systems, for example, automatic vehicle identification systems. The antennae (which are generally tuned antennae) are typically positioned such that they can transmit and receive signals over a specific area.

An automatic vehicle identification system (AVI) is on in which a transponder is mounted on a vehicle and is capable of generating a signal unique to that vehicle. The signal can be detected by any appropriate monitoring means. Generally this will be an antenna system, for example, that described in our co-pending Patent Application GB 9220413.0. The antenna will receive and interpret the signal from the vehicle mounted transponder and may use the signal, for example, for automatically charging motorway tolls, allowing entry into restricted areas, crime prevention, speed monitoring etc.

Very often, it is necessary to mount the transponder directly onto a metal surface such as a car, container, etc. This has the fundamental problem, however, that the transponder can be de-tuned by the metal surface.

Previous solutions have been to detune the tank circuit of the antenna with a pre-determined reverse shift. However the mounting tolerances are then very critical. For ferro-metallic contact surfaces direct contact to the metal surface would still not be possible and thus the transponder may protrude too much away from the surface. This is obviously undesirable. Another solution is to correct the transponder frequency after the actual mounting using a separate ferrite rod. This has the disadvantage of high costs due to time consuming installation. In addition, read deterioration can occur due to low Q-factor when mounting the transponder on ferro metallic surfaces. A further disadvantage which occurs is lowered magnetic efficiency from the transponder antenna itself, due to "short-circuiting" of the field lines.

From US-A-4 101 899 a compact low-profile electrically small antenna for operation in the 25 to 50 MHz frequency range is known. One embodiment comprises a conductive coil in the form of a copper ribbon that is electroless-plated on a thin cylindrical silicone fiberglass substrate which is loaded with a ferrite core. One end of the copper ribbon is connected to a source of RF power, and the distal end of the ribbon is connected to a metal ground plane.

From US-A-4 876 709 an antenna for a cordless telephone system is known which is configured generally as a plate and placed outboard away from the user's face to minimize the tuning effects during normal handling in use. It is reported that an optional counterpoising shield made of a good electrical conductor such as copper foil may be interposed between the receiver-transducer and the antenna plate to further minimize the tuning effects.

One object of the present invention is to provide a system which overcomes at least some of the disadvantages of present systems.

According to one aspect of the present invention there is provided a transponder assembly for a recognition and identification system as defined in claim 1.

This has the advantage that the non-ferric material prevents any ferromagnetic material from interfering with the reception and transmission of field lines from the antenna.

Reference will now be made, by way of example, to the accompanying drawings, in which:
Figure 1 is a cross-section of a front view of a transponder according to one aspect of the present invention;
Figure 2 is a cross-section of a top view of the Figure 1 transponder; and
Figure 3 is a cross-section of a side view of the transponder of Figures 1 and 2.

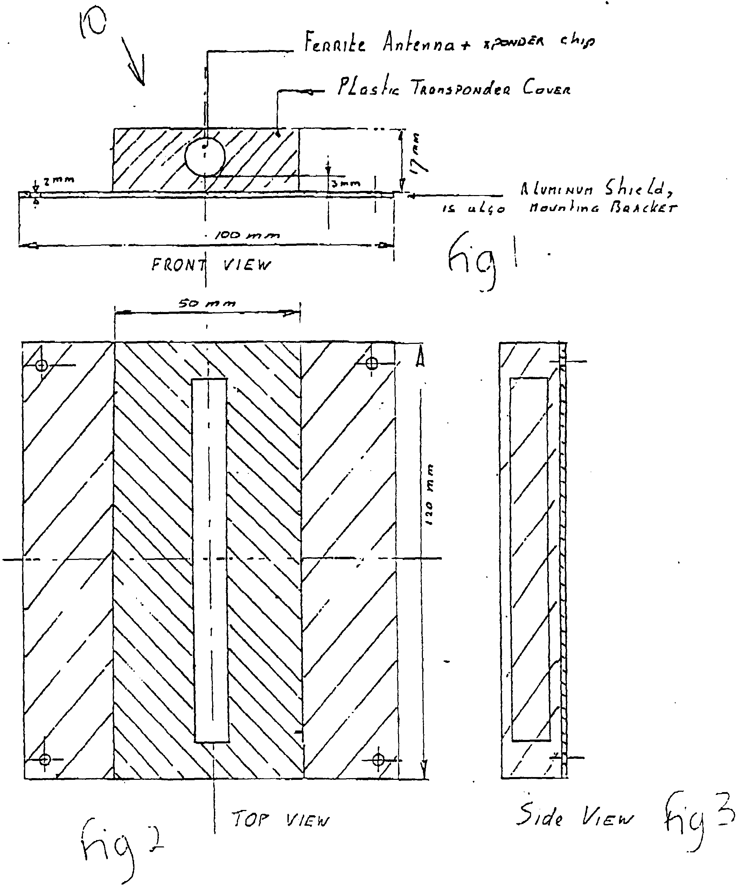

The transponder is shown generally at 10 and comprises a ferrite antenna (12) and transponder chip, not shown, covered with a plastics material 14. The antenna may be alternatively formed of other suitable material such as, for example, magnetic material.

The antenna has circuitry associated with it, which can generate a resonance in the antenna and receive and process information. Part of this circuitry is known as a tank circuit and forms part of the transponder. This is a section of resonant co-axial transmission line, or a tuned circuit, which accepts power from an oscillator and delivers it harmonic free to the load (the antenna in this case).

The transponder further comprises an aluminium shield 16 the edges of which are substantially parallel to the transponder antenna. Other orientations of the shield relative to the antenna are possible and other non-ferrous metals such as copper, for example, may also be used for the shield.

The shield itself will cause a detuning on the transponder tank circuit, which is compensated for by correcting the initial inductivity of the transponder antenna in such a way that when the tank is mounted mechanically to the shield, the transponder frequency is corrected to the operating frequency which is typically 134.2 kHz. In this case the antenna is mounted 3mm above the surface of the aluminium shield to produce the required pretuning. Clearly for certain applications other frequencies will be used. The shield will then prevent the tank from being detuned or lowered in Q-factor (quality factor) when mounted onto any other metal surface (ferrous-metal or non ferrous metallic). The shield is arranged to face the metal surface of any container or the like on which the transducer is mounted. The shield may be the mounting bracket as well as a shield in certain circumstances.

The aluminium or copper used to make the shield is highly conductive and field lines falling on the shield are reflected away, thus preventing detuning of the antenna. If the shield were not in place, then the ferromagnetic material on which the transducer is mounted would "suck away" the field lines from the transducer, thereby detuning the antenna.

When the shield is used, transponder mounting can be made directly to metal surfaces, without performance being affected, This widens the applications of the transponders practical usage. There is no constraint on the mounting surface any more, it can be of any nature. Also, time consuming frequency-corrections after installation are not necessary.

Since the Q-factor does not drop as much with aluminium, for example, as with other metals the read range of the transponder does not suffer and is typically about 2m. In addition, the aluminium can actually shield the transponder from other metals which would have dropped the Q-factor further.

This transponder can be used in an AVI (Automatic Vehicle Identification) container transponder, Logistic automation in production processes, and any other area where Registration and Identification systems are targeted for large read range applications which are independent of the mounting surface.

The transponder can be used with the antenna system described in GB 9220413.0 (TI-16815 UK) with the antenna described in GB 9220411.4 (TI-16817 UK) or in the transponder system described in GB 9220412.2 (TI-17341).

## Claims

1. A transponder assembly for use with a recognition and identification system suitable for mounting on a metal object without being de-tuned comprising a shield member (16) formed of a non-ferrous material, an insulative support member (14) mounted to said shield member (16), and a transponder (10) having an antenna mounted on the support member (14), the transponder antenna being connected to a tank circuit, wherein the transponder (10) is electrically insulated from the shield member (16) while the shield member (16) still interacts with the tank circuit such that the combination of the tank circuit, the antenna and the shield (16) are tuned as a single unit to a selected operating frequency.

2. The transponder assembly of claim 1, wherein the shield (16) comprises an Aluminium metal sheet.

3. The transponder assembly of claim 1 or claim 2, wherein the antenna comprises a ferrite antenna.

4. The transponder assembly of claim 3, wherein the ferrite antenna is separated from the shield (16) by a predetermined distance such that the antenna is pretuned.

5. The transponder assembly of claim 4, wherein the predetermined distance is about 3 mm and the operating frequency of the transponder (10) is about 134.2 kHz.

6. The transponder assembly of any preceding claim, wherein the insulative cover (14) comprises a plastics material.

7. The transponder assembly of claim 1, wherein the shield (16) comprises a Copper metal sheet.

8. The transponder assembly of any preceding claim, wherein the registration and identification system is an automatic vehicle identification system.

## Patentansprüche

1. Transponder-Baueinheit zur Verwendung mit einem Erkennungs- und Identifizierungssystem, die an einem metallischen Gegenstand angebracht werden kann, ohne verstimmt zu werden, mit einem Abschirmelement (16), das aus einem Nichteisenmaterial gebildet ist, einem isolierenden Trägerelement (14), das an dem Abschirmelement (16) angebracht ist, und einem Transponder (10), der eine am Trägerelement (14) angebrachte Antenne besitzt, die mit einer Tank-Schaltung verbunden ist, wobei der Transponder (10) vom Abschirmelement (16) elektrisch isoliert ist, während das Abschirmelement (16) noch immer mit der Tank-Schaltung in Wechselwirkung ist, so daß die Kombination aus der Tank-Schaltung, der Antenne und der Abschirmumg (16) als eine einzelne Einheit auf eine ausgewählte Betriebsfrequenz abgestimmt sind.

2. Transponder-Baueinheit nach Anspruch 1, wobei die Abschirmung (16) eine Aluminiumblechtafel umfaßt.

3. Transponder-Baueinheit nach Anspruch 1 oder 2, wobei die Antenne eine Ferritantenne ist.

4. Transponder-Baueinheit, wobei die Ferritantenne von der Abschirmung (16) um eine vorgegebene Strecke getrennt ist, so daß die Antenne vorabgestimmt ist.

5. Transponder-Baueinheit nach Anspruch 4, wobei die vorgegebene Strecke ungefähr 3 mm beträgt und die Betriebsfrequenz des Transponders (10) ungefähr 134,2 kHz beträgt.

6. Transponder-Baueiheit nach irgendeinem vorangehenden Anspruch, wobei die isolierende Abdeckung (14) ein Kunststoffmaterial umfaßt.

7. Transponder-Baueinheit nach Anspruch 1, wobei die Abschirmung (16) eine Kupferblechtafel ist.

8. Transponder-Baueinheit nach irgendeinem vorangehenden Anspruch, wobei das Registrierungs- und Identifizierungssystem ein automatisches Fahrzeugidentifizierungssystem ist.

## Revendications

1. Système de transpondeur destiné à être utilisé avec un système de reconnaissance et d'identification approprié pour le montage sur un objet métallique sans être désaccordé, comprenant un élément (16) formant écran formé d'un matériau non ferreux, un élément (14) de support isolant monté sur ledit élément (16) formant écran, et un transpondeur (10) comportant une antenne montée sur l'élément (14) de support, l'antenne de transpondeur étant connectée à un circuit bouchon, le transpondeur (10) étant isolé électriquement de l'élément (16) formant écran tandis que l'élément (16) formant écran interagit encore avec le circuit bouchon de telle sorte que la combinaison du circuit bouchon, de l'antenne et de l'écran (16), est accordée comme une seule unité, sur une fréquence de fonctionnement sélectionnée.

2. Assemblage de transpondeur selon la revendication 1, dans lequel l'écran (16) comprend une feuille métallique en aluminium.

3. Assemblage de transpondeur selon la revendication 1 ou la revendication 2, dans lequel l'antenne comprend une antenne en ferrite.

4. Assemblage de transpondeur selon la revendication 3, dans lequel l'antenne en ferrite est séparée de l'écran (16) par une distance prédéterminée, de telle sorte que l'antenne est pré-accordée.

5. Assemblage de transpondeur selon la revendication 4, dans lequel la distance prédéterminée est d'environ 3 mm et la fréquence de fonctionnement du transpondeur (10) est d'environ 134,2 kHz.

6. Assemblage de transpondeur selon l'une quelconque des revendications précédentes, dans lequel le couvercle isolant (14) comprend une matière plastique.

7. Assemblage de transpondeur selon la revendication 1, dans lequel l'écran (16) comprend une feuille métallique en cuivre.

8. Assemblage de transpondeur selon l'une quelconque des revendications précédentes, dans lequel le système d'enregistrement et d'identification est un système d'identification automatique de véhicule.
